# EUROPEAN PATENT APPLICATION

(11) **EP 4 628 046 A1**
(43) Date of publication of application: **08.10.2025**
(21) Application number: 23897503.1
(22) Date of filing: 15.11.2023
(51) Int. Cl.: A61C 3/02, A61C 1/05, A61C 1/12

(54) **TURBINE ROTOR, CARTRIDGE, AND MEDICAL CUTTING INSTRUMENT**

(30) Priority: 29.11.2022 JP 2022190794
(71) Applicant: Nakanishi Inc., Kanuma-shi, Tochigi 322-8666 (JP)
(72) Inventor: INOUE Yamato, Kanuma-shi, Tochigi 322-8666 (JP)
(74) Representative: Lewis Silkin LLP
(86) International application number: PCT/JP2023/041087
(87) International publication number: WO 2024/116852

(57) **Abstract**

Provided are a turbine rotor of a rotary cutting instrument and a rotary cutting instrument having a turbine rotor with which it is possible to reduce a sharp increase in the rotational speed of a turbine rotor and to suppress a reduction in cutting power due to a loss of speed when a cutting load is input during rotation of the turbine rotor. A turbine rotor (42) of an air-turbine handpiece (1) is formed of a metal having a density greater than or equal to 4.0 [g/cm³].

## Description

### TECHNICAL FIELD

The present invention relates to a turbine rotor of a medical cutting instrument used in dental or surgical treatments, a cartridge detachably attached to the medical cutting instrument, and a medical cutting instrument equipped with the turbine rotor.

### BACKGROUND ART

Conventionally, medical cutting instruments such as air turbine handpieces have been known. For example, in dental treatments, various types of medical cutting instruments such as an air turbine handpiece or a micromotor handpiece equipped with cutting tools like diamond points, carbide burs, files, and reamers are used. For example, a related-art publication JP 2020-174901 A discloses an air turbine handpiece, which is a medical cutting instrument.

The air turbine handpiece described in the related-art publication has a head that accommodates a spindle and a turbine rotor. The spindle has a substantially cylindrical shape and is supported rotatably in the head via bearings. The turbine rotor is fixed to the outer peripheral surface of the spindle, and a cutting tool is inserted into a hollow interior of the spindle.

In this type of air turbine handpiece, the turbine rotor has conventionally been formed of aluminum for ease of processing during molding.

### SUMMARY OF INVENTION

However, while a turbine rotor made of aluminum can easily mold complex shapes, its inertia moment during rotation is small, which makes the rotation speed prone to rapid increase. When the rotation speed of the turbine rotor increases rapidly, the load on the bearing supporting the spindle also increases. Additionally, since the inertia moment during rotation is small for a turbine rotor made of aluminum, it tends to stall when a cutting load is applied during rotation, leading to reduced cutting power.

The present invention provides a turbine rotor for a rotary cutting instrument that can reduce the rapid increase in the rotation speed of the turbine rotor and suppress the drop in cutting power when a cutting load is applied during rotation, a cartridge equipped with the turbine rotor, and a rotary cutting instrument equipped with the turbine rotor.

A first aspect of the present invention provides a turbine rotor for a medical cutting instrument, the turbine rotor including:
a turbine rotor formed of a metal having a density of 4.0 [g/cm³] or more.

A second aspect of the present invention provides a turbine rotor for a medical cutting instrument, the turbine rotor including:
a turbine rotor having a substantially cylindrical rotating shaft portion and a plurality of turbine blade portions extending radially outwardly with respect to the axial direction of the rotating shaft portion,
wherein the rotating shaft portion being formed of a metal having a density of 4.0 [g/cm³] or more.

A third aspect of the present invention provides a turbine rotor for a medical cutting instrument,
wherein a counterweight is attached to the turbine rotor, and
wherein the counterweight is formed of a material denser than the material of the turbine rotor.

A fourth aspect of the present invention provides a cartridge detachably attachable to a medical cutting instrument, the cartridge including one of the turbine rotors described above as the first to third aspect and a quick stop mechanism for braking the turbine rotor.

A fifth aspect of the present invention provides a medical cutting instrument including one of the turbine rotors described above as the first to third aspect, and
wherein the medical cutting instrument further includes a quick stop mechanism for braking the turbine rotor.

According to the present invention, it is possible to reduce the rapid increase in the rotation speed of the turbine rotor and suppress the drop in cutting power when a cutting load is applied during rotation.

### BRIEF DESCRIPTION OF DRAWINGS

FIG. 1 is a cross-sectional view of a head of an air turbine handpiece with the turbine rotor according to a first embodiment of the present invention.
FIG. 2 is an enlarged view of a vicinity of a seal member shown in FIG. 1.
FIG. 3 is a cross-sectional view of a head of an air turbine handpiece with a turbine rotor according to a second embodiment of the present invention.
FIG. 4 is a cross-sectional view of a head of an air turbine handpiece with a turbine rotor according to a third embodiment of the present invention.
FIG. 5 is a cross-sectional view of a head of an air turbine handpiece with a turbine rotor according to a fourth embodiment of the present invention.

### DESCRIPTION OF EMBODIMENTS

Hereinafter, embodiments of the turbine rotor, cartridge, and air turbine handpiece as an example of a medical cutting instrument of the present invention will be described with reference to the accompanying drawings.

### First Embodiment

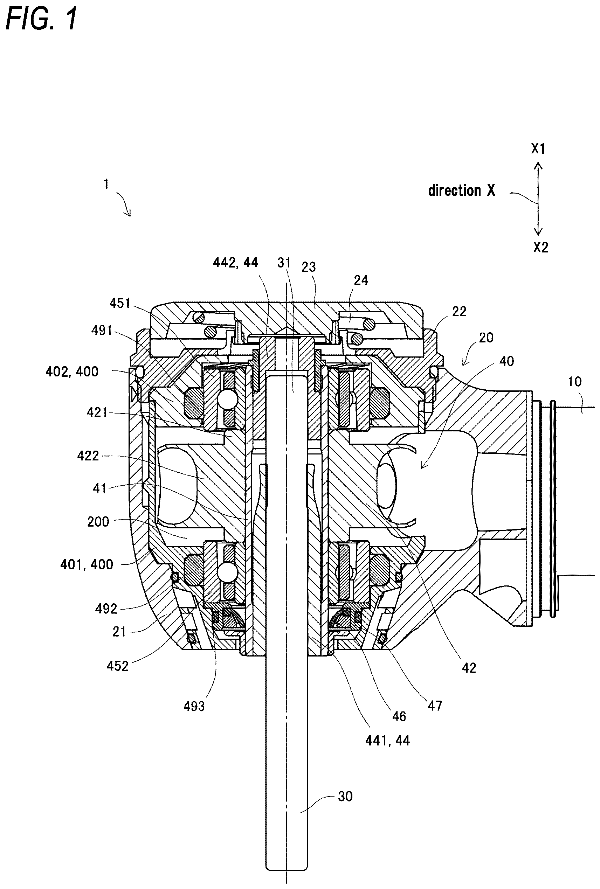

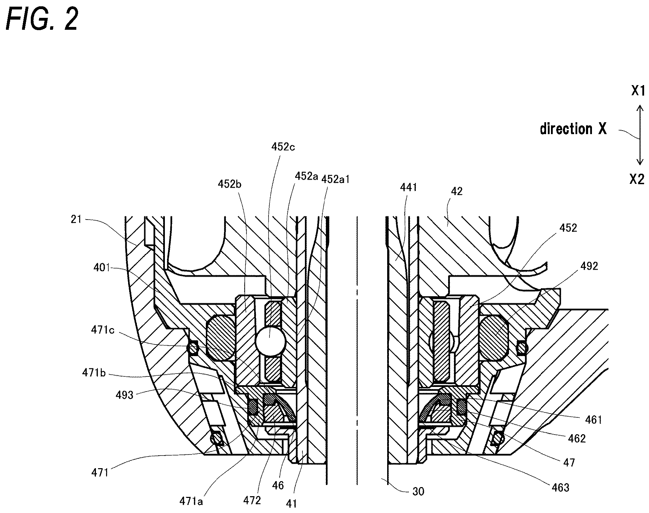

First, an air turbine handpiece 1 as a first embodiment of the present invention will be described with reference to FIGS. 1 and 2.

As shown in FIG. 1, the air turbine handpiece 1 of this embodiment includes a handpiece main body 10, which is the main part of the air turbine handpiece 1, and a head part 20 provided at the tip portion of the handpiece main body 10. A cutting tool 30 can be detachably attached to the head part 20. Various types of cutting tools 30 may be attached to the head part 20 depending on the cutting target or other factors when using the air turbine handpiece 1.

The cutting tool 30 attached to the head part 20 has a cylindrical shaft portion 31 formed at one end portion. The cutting tool 30 is attached to the head part 20 by inserting the shaft portion 31 into the head part 20. One end of the cutting tool 30 (i.e., the tip of the shaft portion 31) is housed inside the head part 20, while the other end protrudes outside the head part 20.

Here, for conciseness and clarity, the axial direction of the shaft portion 31 of the cutting tool 30 attached to the air turbine handpiece 1 is defined as an X direction (or direction X), with one end (i.e., the tip of the shaft portion 31) defined as X1 side, and the other end as X2 side. Unless otherwise specified, axial, circumferential, and radial directions refer to directions based on the axial direction of the shaft portion 31.

The cutting tool 30 is therefore installed such that its tip on the X1 side is housed within the head part 20, while the end on the X2 side protrudes outward from the head part 20.

The head part 20 includes a main housing 21 with an open end on the X1 side and a head cap 22 closing the open end on the X1 side. Inside the head part 20, an internal housing space 200 is formed, enclosed by the main housing 21 and the head cap 22.

The internal housing space 200 in the head part 20 accommodates a hollow, substantially cylindrical spindle 41 extending in the X direction, a turbine rotor 42 fixed to the outer peripheral surface of the spindle 41, a chuck mechanism portion 44 supported on the inner peripheral surface of the spindle 41, a first bearing 451 and a second bearing 452, and a seal member 46 as a modularized cartridge 40. Additionally, the cartridge 40 includes a cartridge housing 400 that encompasses the spindle 41, turbine rotor 42, chuck mechanism portion 44, first bearing 451, second bearing 452, and seal member 46. The cartridge housing 400 includes a main cartridge housing 401 with an open X1 side, and a cartridge cap 402 provided in the open end on the X1 side of the main cartridge housing 401. In the present embodiment, the cartridge 40 is detachably attached to the head part 20. Thus, by replacing the cartridge 40 attached to the head part 20, the spindle 41, turbine rotor 42, chuck mechanism portion 44, first bearing 451, second bearing 452, and seal member 46 can be replaced. Further, a variety of cartridges 40 can be attached to the head part 20 depending on the cutting target, etc., when using the air turbine handpiece 1.

A push button 23 displaceable in the X direction relative to the main housing 21 and the head cap 22 is provided on the X1 side of the head cap 22. The push button 23 is connected to the chuck mechanism portion 44 of the cartridge 40. A coil spring 24 is mounted between the push button 23 and the head cap 22, urging the push button 23 toward the X1 side relative to the head cap 22.

The X1 side end of the spindle 41 is rotatably supported by the first bearing 451. The X2 side end of the spindle 41 is rotatably supported by the second bearing 452. The first bearing 451 is fixed to the cartridge cap 402 via an O-ring 491. The gap between the first bearing 451 and the cartridge cap 402 is sealed by the O-ring 491. The second bearing 452 is fixed near the X2 side end of the main cartridge housing 401 via an O-ring 492. The gap between the second bearing 452 and the main cartridge housing 401 is sealed by the O-ring 492.

The turbine rotor 42 includes a substantially cylindrical rotating shaft portion 421 fitted to the outer peripheral surface of the spindle 41 and a plurality of turbine blade portions 422 extending radially outwardly from the rotating shaft portion 421 with respect to the axial direction. The rotating shaft portion 421 and the turbine blade portions 422 may be integrally molded from the same material or formed of different materials and integrated through bonding. In the present embodiment, the rotating shaft portion 421 and the turbine blade portions 422 are integrally molded of the same material. When the turbine rotor 42 rotates, the spindle 41 rotates integrally with the turbine rotor 42.

The chuck mechanism portion 44 has a hollow, substantially cylindrical chuck portion 441 fitted to the inner peripheral surface of the spindle 41 and a pusher 442 provided at the X1 side end of the spindle 41 to operate the chuck portion 441. The cutting tool 30 is supported by the chuck portion 441 so as not to displace radially relative to the spindle 41.

The pusher 442 is fitted to the inner peripheral surface of the spindle 41 and supported to slide in the X direction. The pusher 442 operates the chuck portion 441 to switch between a state where the X1 side end of the cutting tool 30's shaft portion 31 is held by the chuck portion 441 and a state where it is not held.

When a user presses the push button 23 toward the X2 side, the pusher 442 connected to the push button 23 slides toward the X2 side, and the chuck portion 441 switches to an open state. The chuck mechanism portion 44 maintains the chuck portion 441 in an open state under the user's pressing operation of the push button 23 toward the X2 side.

When attaching the cutting tool 30 to the head part 20, the user presses the push button 23 toward the X2 side, causing the pusher 442 to slide toward the X2 side, thus maintaining the chuck portion 441 in an open state, making it possible to receive the cutting tool 30. By maintaining the chuck portion 441 in the open state, the user inserts the shaft portion 31 of the cutting tool 30 into the hollow interior of the spindle 41 from the X2 side and abuts the tip of the shaft portion 31 against the chuck mechanism portion 44. When the user releases the push button 23 while the tip of the shaft portion 31 of the cutting tool 30 is in contact with the chuck mechanism portion 44, the pusher 442 slides toward the X1 side, and the chuck portion 441 closes while holding the cutting tool 30's shaft portion 31. The cutting tool 30 is held by the chuck mechanism portion 44 and attached to the head part 20 via the cartridge 40. Thus, the cutting tool 30 can rotate integrally with the spindle 41 and the turbine rotor 42.

When removing the cutting tool 30 from the head part 20, the user presses the push button 23 toward the X2 side while the cutting tool 30 is held by the chuck portion 441, causing the pusher 442 to slide toward the X2 side, switching the chuck portion 441 to an open state, making it possible to remove the cutting tool 30. The user pulls out the cutting tool 30 toward the X2 side while pressing the push button 23 toward the X2 side, causing the cutting tool 30 to detach from the chuck mechanism portion 44 and be removed from the head part 20.

The handpiece main body 10 includes a supply duct (not shown) for supplying high-pressure air (compressed air) as the working gas to the head part 20 and a discharge duct (not shown) for exhausting the high-pressure air supplied to the head part 20 to the outside. Note that the high-pressure air supplied to the head part 20 is exhausted not only from the discharge duct but also from a gap created between the contact piece 462 of the seal member 46 and the outer peripheral surface of the spindle 41, which will be described later.

The high-pressure air supplied from the supply duct is introduced into the interior of the cartridge housing 400 and ejected onto the turbine blade portions 422 of the turbine rotor 42. The turbine rotor 42 rotates when the turbine blade portions 422 receive the high-pressure air. As a result, the spindle 41 and the cutting tool 30 rotate integrally with the turbine rotor 42.

The seal member 46 is fixed near the X2 end of the main cartridge housing 401, which has a substantially cylindrical shape.

As shown in FIG. 2, the second bearing 452 includes an inner ring 452a and an outer ring 452b facing each other, and balls 452c positioned in the gap between the facing inner ring 452a and outer ring 452b.

An inner ring opening 452a1 is formed inside the inner ring 452a. This inner ring opening 452a1 is fixed to the outer peripheral surface of the spindle 41. Therefore, the inner ring 452a rotates together with the spindle 41.

The seal member 46 prevents foreign substances such as saliva or blood from entering the interior of the cartridge housing 400. The seal member 46 of this embodiment prevents foreign substances from entering the turbine rotor 42 through the gap of the second bearing 452.

The seal member 46 is made of an elastic material, such as silicone rubber or fluororubber. However, the seal member 46 can also be made of other elastic materials besides silicone rubber and fluororubber. The seal member 46 surrounds the outer peripheral surface of the spindle 41 and has a ring shape with an open center. The seal member 46 has a maximum thickness at the outer peripheral portion 461 and a contact piece 462 that extends inward from the inner edge of the outer peripheral portion 461 towards the center of the ring. The contact piece 462 is a part that deforms elastically and has a lower modulus of elasticity than the outer peripheral portion 461. The seal member 46 further has a ring opening 463 at the center of the ring, inside the contact piece 462.

On the X2 side of the outer ring 452b of the second bearing 452, a seal holding member 47 is attached. The seal holding member 47 includes a base member 471 fixed to the main cartridge housing 401, and a holding member 472 pinching the outer peripheral portion 461 of the seal member 46 together with the base member 471.

The base member 471 has a cylindrical portion 471a with a substantially cylindrical shape, an outer flange portion 471b extending radially outward from the X1 side end of the cylindrical portion 471a, and an inner flange portion 471c extending radially inward from the X1 side end of the cylindrical portion 471a.

The cylindrical portion 471a is fitted and fixed to the main cartridge housing 401 via an O-ring 493 provided on the outer peripheral surface of the cylindrical portion 471a.

The X1 side surface of the outer flange portion 471b contacts the X2 side end surface of the outer ring 452b of the second bearing 452, and the X2 side surface contacts the main cartridge housing 401. The outer flange portion 471b is pinched in the X direction by the outer ring 452b of the second bearing 452 and the main cartridge housing 401.

The base member 471 arranges the outer peripheral portion 461 of the seal member 46 to face the X2 side surface of the inner flange portion 471c.

The holding member 472 is fixed to the base member 471 and contacts the outer peripheral portion 461 of the seal member 46 from the X2 side. The seal holding member 47 holds the outer peripheral portion 461 of the seal member 46 by pinching it between the inner flange portion 471c of the base member 471 and the holding member 472.

The contact piece 462 of the seal member 46 is arranged in the space surrounded by the inner peripheral surface of the cylindrical portion 471a of the seal holding member 47 and the outer peripheral surface of the spindle 41. When the turbine rotor 42 of the air turbine handpiece 1 is not operating, that is, when high-pressure air is not supplied to the head part 20 from the supply duct of the handpiece main body 10, the contact piece 462 is in contact with the outer peripheral surface of the spindle 41.

Moreover, the diameter of the ring opening 463 of the seal member 46 is smaller than the diameter of the outer peripheral surface of the spindle 41. Therefore, when the turbine rotor 42 of the air turbine handpiece 1 is not operating, the contact piece 462 curves towards the X2 side and contacts the outer peripheral surface of the spindle 41 with contact pressure due to its elastic force. The position of contact between the contact piece 462 and the outer peripheral surface of the spindle 41 is the edge of the ring opening 463.

Thus, when high-pressure air is not supplied to the head part 20 from the supply duct of the handpiece main body 10 and the turbine rotor 42 is not rotating, the contact piece 462 of the seal member 46 contacts the outer peripheral surface of the spindle 41 and seals the gap between the main cartridge housing 401 and the spindle 41.

Consequently, the seal member 46 can prevent foreign substances such as saliva and blood from entering the interior of the cartridge 40.

When high-pressure air is supplied from the supply duct of the handpiece main body 10 to the head part 20, the pressure inside the cartridge housing 400 increases, and when the turbine rotor 42 rotates at a preset speed or higher, air leaks from the cartridge housing 400 through the second bearing 452 into the space where the contact piece 462 of the seal member 46 is located. The contact piece 462 of the seal member 46 is pushed radially outward by the leaking air and separates from the outer peripheral surface of the spindle 41, creating a gap between the contact piece 462 and the outer peripheral surface of the spindle 41.

As mentioned earlier, when high-pressure air is supplied to the head part 20 from the supply duct of the handpiece main body 10, the turbine blade portions 422 of the turbine rotor 42 receive the high-pressure air, causing the turbine rotor 42 to rotate. Consequently, the spindle 41 and the cutting tool 30 rotate integrally with the turbine rotor 42. When high-pressure air is supplied to the head part 20 from the supply duct of the handpiece main body 10, a gap forms between the contact piece 462 of the seal member 46 and the outer peripheral surface of the spindle 41, eliminating contact resistance and enabling the spindle 41 to rotate easily.

On the other hand, when the supply of high-pressure air to the head part 20 from the supply duct of the handpiece main body 10 stops, the rotation speed of the turbine rotor 42, spindle 41, and cutting tool 30 decreases, while the air leaking to the space where the contact piece 462 of the seal member 46 is located reduces. As the rotation speed of the turbine rotor 42 drops below a preset speed, the contact piece 462 pushed radially outward comes back into contact with the outer peripheral surface of the spindle 41. The contact resistance between the contact piece 462 of the seal member 46 and the outer peripheral surface of the spindle 41 brakes the rotation of the turbine rotor 42, spindle 41, and cutting tool 30. In this way, the seal member 46 functions as a quick stop mechanism to brake the rotation of the turbine rotor 42, spindle 41, and cutting tool 30 when the supply of high-pressure air to the head part 20 stops. Consequently, the seal member 46 can stop the rotation of the turbine rotor 42, spindle 41, and cutting tool 30 in a short time after the supply of high-pressure air to the head part 20 from the supply duct of the handpiece main body 10 stops.

The turbine rotor 42 is formed of a metal with a density of 4.0 [g/cm³] or more. When the turbine rotor 42 has a diameter of 10 [mm] and an axial length of 3.2 [mm] with eight blades, the inertia moment of the turbine rotor 42 formed of stainless steel is 10.8 [g·mm²]. By comparison, if the turbine rotor of the same shape is formed of aluminum, the inertia moment of the turbine rotor is 3.7 [g·mm²].

Thus, forming the turbine rotor 42 from a metal with a density of 4.0 [g/cm³] or more can increase the inertia moment of the turbine rotor 42. This reduces the rapid increase in rotation speed of the turbine rotor 42 when high-pressure air is supplied to the head part 20 from the supply duct of the handpiece main body 10, thereby reducing the load on the second bearing 452. Additionally, when a cutting load is applied to the turbine rotor 42 during rotation through the cutting tool 30, the turbine rotor 42 is less likely to stall, preventing a decrease in the cutting power of the cutting tool 30.

Furthermore, the mass center of the air turbine handpiece 1 can be brought closer to the head part 20, increasing the natural frequency of the turbine rotor 42 when high-pressure air is supplied to the head part 20 from the supply duct of the handpiece main body 10, and the turbine rotor 42 is rotating. This reduces the unpleasant noise generated by the turbine rotor 42 while rotating.

In the present embodiment, the turbine rotor 42 is formed of stainless steel. More specifically, in this embodiment, the turbine rotor 42 is made of SUS303, an austenitic stainless steel.

Consequently, forming the turbine rotor 42 from stainless steel, which is easy to process, makes it easy to mold the turbine rotor 42.

Additionally, since the turbine rotor 42 is made of austenitic stainless steel, which is less likely to corrode during hot water washing, it has excellent corrosion resistance. Therefore, it is not necessary to perform surface treatments such as anodizing to improve the corrosion resistance of the turbine rotor 42.

Furthermore, the turbine rotor 42 has a Young's modulus [GPa] / density [g/cm³] value of 20 or higher. Generally, among objects with the same shape subjected to the same force, those with a higher Young's modulus exhibit less deformation. Among items with the same shape provided with the same rotation, those with higher density experience greater forces acting on them. Therefore, objects with a higher Young's modulus and lower density exhibit less deformation due to rotation. In this embodiment, the turbine rotor 42, having a Young's modulus [GPa] / density [g/cm³] value of 20 or higher, can retain small deformation amounts even during high-speed rotation. Therefore, even during high-speed rotation of the turbine rotor 42, the internal diameter of the rotary shaft portion 421 minimally expands, preventing the loosening of the fixation between the turbine rotor 42 and the spindle 41.

Since the air turbine handpiece 1 is equipped with a seal member 46, which functions as a quick stop mechanism to brake the rotation of the turbine rotor 42, spindle 41, and cutting tool 30 when the supply of high-pressure air from the supply duct of the handpiece main body 10 to the head part 20 stops, it can rapidly halt the rotation of the turbine rotor 42, spindle 41, and cutting tool 30 even when a material with a large inertia moment is used for the turbine rotor 42.

Also, because the seal member 46 serves as a quick stop mechanism to brake the rotation of the turbine rotor 42, spindle 41, and cutting tool 30, this quick stop mechanism can be implemented without increasing the number of components.

In this context, the circumferential surface roughness Rz of the outer peripheral surface of the spindle 41, which contacts the seal member 46, is 12.5 [µm] or less. By keeping the circumferential surface roughness Rz of the outer peripheral surface of the spindle 41 minimal, sufficient contact resistance between the contact piece 462 of the seal member 46 and the outer peripheral surface of the spindle 41 can be ensured. Therefore, when a material with a large inertia moment is used for the turbine rotor 42, adequate braking force to stop the rotation of the turbine rotor 42, spindle 41, and cutting tool 30 can be secured.

Additionally, the air turbine handpiece 1 is used after injecting lubricating oil into the head part 20 before use. Thus, the air turbine handpiece 1 is utilized when each part inside the head part 20 is coated with a film of lubricant. For example, first, lubricating oil is sufficiently injected into the head part 20 from the supply duct of the handpiece main body 10 to remove the adhered dirt from each part inside the head part 20 and coat each part with a film of lubricant. Thereafter, any excess lubricant is removed before using the air turbine handpiece 1.

This prevents failures of each part inside the head part 20 due to dirt adhesion and reduces the wear of the first bearing 451 and the second bearing 452. Furthermore, since the outer peripheral surface of the spindle 41 and the seal member 46 are also coated with a lubricant film during the use of the air turbine handpiece 1, this can suppress the wearing of the contact piece 462 of the seal member 46 when braking the rotation of the turbine rotor 42, spindle 41, and cutting tool 30 via the contact resistance between the contact piece 462 of the seal member 46 and the outer peripheral surface of the spindle 41.

### Second Embodiment

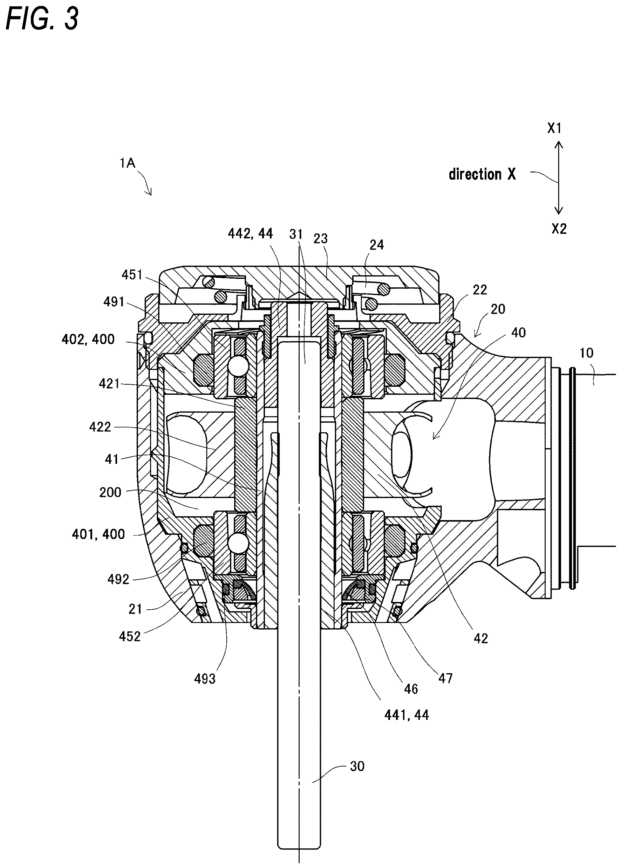

Next, an air turbine handpiece 1A as a second embodiment of the present invention will be described with reference to FIG. 3. In the following description, components similar to those of the air turbine handpiece 1 of the first embodiment are denoted by the same reference numerals, and redundant explanations are omitted or simplified. The differences between the air turbine handpiece 1 of the first embodiment and the air turbine handpiece 1A of the second embodiment will be described in detail below.

As shown in FIG. 3, in the air turbine handpiece 1A of this embodiment, the turbine rotor 42 is formed with the rotating shaft portion 421 and turbine blade portions 422 being made of different materials.

In this embodiment, the rotating shaft portion 421 is formed of a metal with a density of 4.0 [g/cm³] or more, and the turbine blade portions 422 are formed of materials such as aluminum or resin. Specifically, the rotating shaft portion 421 is made of stainless steel, more specifically, SUS303 austenitic stainless steel.

By forming the rotating shaft portion 421 from a metal with a density of 4.0 [g/cm³] or more, the inertia moment of the turbine rotor 42 can be increased. This reduces the rapid increase in the rotation speed of the turbine rotor 42 when high-pressure air is supplied to the head part 20 from the supply duct of the handpiece main body 10, thereby reducing the load on the second bearing 452. Additionally, when the turbine blade portions 422 have a complex shape, they can be easily molded and the issue of rapid speed increase and load on the bearings can be managed more effectively.

Moreover, since the turbine blade portions 422 can be made of more easily processed materials such as aluminum or resin, it is easier to form turbine blade portions 422 with complex shapes.

As the rotating shaft portion 421 has a substantially cylindrical shape, it can be easily molded even when made of stainless steel.

Furthermore, as the rotating shaft portion 421 is made of austenitic stainless steel unlikely to corrode during hot water washing, it shows excellent corrosion resistance, eliminating the need for surface treatments such as anodizing to improve corrosion resistance.

In addition, the rotating shaft portion 421 has a Young's modulus [GPa] / density [g/cm³] value of 20 or higher. Generally, among objects with the same shape subjected to the same force, those with a higher Young's modulus exhibit less deformation, and among items with the same shape provided with the same rotation, those with higher density experience greater forces acting on them. Therefore, objects with a higher Young's modulus and lower density exhibit less deformation due to rotation. In this embodiment, the rotating shaft portion 421, having a Young's modulus [GPa] / density [g/cm³] value of 20 or higher, maintains a small deformation amount even during high-speed rotation. Therefore, even during high-speed rotation of the turbine rotor 42, the internal diameter of the rotating shaft portion 421 minimally expands, preventing the loosening of the fixation between the turbine rotor 42 and the spindle 41.

### Third Embodiment

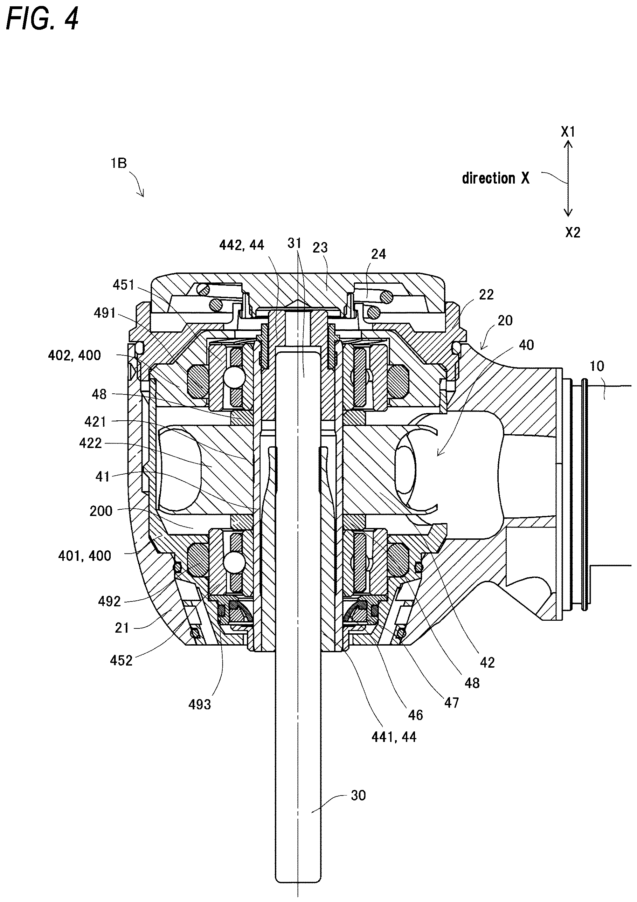

Next, an air turbine handpiece 1B as a third embodiment of the present invention will be described with reference to FIG. 4. In the following description, components similar to those of the air turbine handpiece 1 of the first embodiment are denoted by the same reference numerals, and redundant explanations are omitted or simplified. The differences between the air turbine handpiece 1 of the first embodiment and the air turbine handpiece 1B of the third embodiment will be described in detail below.

As shown in FIG. 4, the air turbine handpiece 1B of this embodiment is provided with counterweights 48 attached to the turbine rotor 42. The counterweights 48 rotate integrally with the turbine rotor 42.

In this embodiment, the turbine rotor 42 is integrally molded with the rotating shaft portion 421 and turbine blade portions 422 made of the same material. The turbine rotor 42 is formed of aluminum in this embodiment.

The counterweights 48 are provided in pairs on the X1 side and the X2 side of the turbine rotor 42. Both counterweights 48 have a ring shape centered on the rotational axis of the turbine rotor 42. In this embodiment, the pair of counterweights 48 are formed to fit the outer peripheral surface of the spindle 41.

The counterweights 48 are made of materials denser than the aluminum used for the turbine rotor 42. The counterweights 48 may be formed of materials such as stainless steel, titanium, brass, nickel silver, or phosphor bronze.

By attaching counterweights 48 made of materials denser than the material of the turbine rotor 42 to the turbine rotor 42, the inertia moment of the turbine rotor 42 with counterweights 48 can be increased. This reduces the rapid increase in the rotation speed of the turbine rotor 42 when high-pressure air is supplied to the head part 20 from the supply duct of the handpiece main body 10, thereby reducing the load on the second bearing 452. Additionally, when a cutting load is applied to the turbine rotor 42 through the cutting tool 30 during rotation, it prevents the turbine rotor 42 from stalling, thus maintaining the cutting power of the cutting tool 30.

Furthermore, since the counterweights 48 can be retrofitted to the turbine rotor 42, it is possible to implement the present invention by attaching the counterweights 48 to existing turbine rotors 42, allowing for easy design changes from conventional turbine rotors 42.

Moreover, even if the counterweights 48 deform due to high-speed rotation of the turbine rotor 42, the fixation between the turbine rotor 42 and the spindle 41 remains secure, improving the freedom in selecting materials for the counterweights 48. For example, the counterweights 48 may be made of materials with low Young's modulus [GPa] / density [g/cm³] values.

### Fourth Embodiment

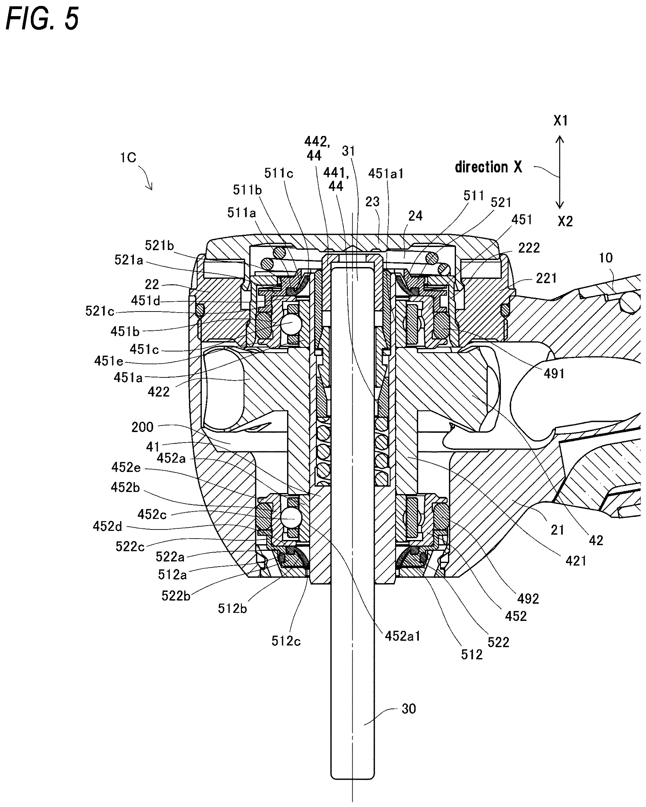

An air turbine handpiece 1C as a fourth embodiment of the present invention will be described with reference to FIG. 5. In the following description, components similar to those of the air turbine handpiece 1 of the first embodiment are denoted by the same reference numerals, and redundant explanations are omitted or simplified. The differences between the air turbine handpiece 1 of the first embodiment and the air turbine handpiece 1C of the fourth embodiment will be described in detail below.

As shown in FIG. 5, in the air turbine handpiece 1C of this embodiment, a seal member 512 is provided on the X2 side of the second bearing 452 in addition to the seal member 511 provided on the X1 side of the first bearing 451.

Moreover, the air turbine handpiece 1C of this embodiment does not have a cartridge housing 400. The seal member 511 is provided on the first bearing 451, and the seal member 512 is provided on the second bearing 452.

In this embodiment, the head cap 22 has an outer member 221 fitted to and fixed to the main housing 21, and an inner member 222 fitted to the inner peripheral surface of the outer member 221.

The first bearing 451 is fixed to the inner peripheral surface of the inner member 222 of the head cap 22 via an O-ring 491, and the second bearing 452 is fixed to the inner peripheral surface of the main housing 21 via an O-ring 492.

The first bearing 451 includes an inner ring 451a and an outer ring 451b facing each other and balls 451c positioned in the gap between the facing inner ring 451a and outer ring 451b.

A holding portion 451d extending radially inward is formed on the X1 side end of the outer ring 451b of the first bearing 451 to support the seal member 511 from the X2 side.

An extension portion 451e extending radially outward is formed on the X2 side end of the outer ring 451b of the first bearing 451 to support the O-ring 491 from the X2 side.

An inner ring opening 451a1 is formed inside the inner ring 451a. This inner ring opening 451a1 is fixed to the outer peripheral surface of the spindle 41. Therefore, the inner ring 451a rotates together with the spindle 41.

A seal holding member 521 is attached to the X1 side of the outer ring 451b of the first bearing 451. The seal holding member 521 locks onto the outer peripheral surface of the outer ring 451b of the first bearing 451. The seal holding member 521 includes a base portion 521a facing the X1 side surface of the outer ring 451b of the first bearing 451, a holding portion 521b extending to the X1 side from the base portion 521a to support the seal member 511 from the X1 side, and a locking portion 521c extending to the X2 side from the base portion 521a to support the O-ring 491 from the X1 side and lock onto the outer peripheral surface of the outer ring 451b of the first bearing 451.

The seal member 511 is made of elastic material such as silicone rubber or fluororubber. However, the seal member 511 can also be made of other elastic materials besides silicone rubber and fluororubber. The seal member 511 surrounds the outer peripheral surface of the spindle 41 and has a ring shape with an open center. The seal member 511 has a maximum thickness at the outer peripheral portion 511a and a contact piece 511b that extends inward from the inner edge of the outer peripheral portion 511a toward the center of the ring. The contact piece 511b is a part that deforms elastically and has a lower modulus of elasticity than the outer peripheral portion 511a. The seal member 511 further has a ring opening 511c at the center of the ring, inside the contact piece 511b.

The outer peripheral portion 511a of the seal member 511 is supported by the holding portion 521b of the seal holding member 521 on the X1 side and by the holding portion 451d of the first bearing 451 on the X2 side, being pinched between the holding portion 521b of the seal holding member 521 and the holding portion 451d of the first bearing 451.

The contact piece 511b of the seal member 511 is arranged in the space surrounded by the inner peripheral surface of the holding portion 521b of the seal holding member 521 and the outer peripheral surface of the spindle 41. When the turbine rotor 42 of the air turbine handpiece 1 is not operating, that is, when high-pressure air is not supplied to the head part 20 from the supply duct of the handpiece main body 10, the contact piece 511b is in contact with the outer peripheral surface of the spindle 41.

Moreover, the diameter of the ring opening 511c of the seal member 511 is smaller than the diameter of the outer peripheral surface of the spindle 41. Therefore, when the turbine rotor 42 of the air turbine handpiece 1 is not operating, the contact piece 511b curves towards the X1 side and contacts the outer peripheral surface of the spindle 41 with contact pressure due to its elastic force. The position of contact between the contact piece 511b and the outer peripheral surface of the spindle 41 is the edge of the ring opening 511c.

Thus, when high-pressure air is not supplied to the head part 20 from the supply duct of the handpiece main body 10 and the turbine rotor 42 is not rotating, the contact piece 511b of the seal member 511 contacts the outer peripheral surface of the spindle 41 and seals the gap between the head cap 22 and the spindle 41.

Consequently, the seal member 511 can prevent foreign substances such as saliva and blood from entering the interior of the cartridge 40.

The second bearing 452 includes an inner ring 452a and an outer ring 452b facing each other, and balls 452c positioned in the gap between the facing inner ring 452a and outer ring 452b.

A holding portion 452d extending radially inward is formed on the X2 side end of the outer ring 452b of the second bearing 452 to support the seal member 512 from the X1 side.

An extension portion 452e extending radially outward is formed on the X1 side end of the outer ring 452b of the second bearing 452 to support the O-ring 492 from the X1 side.

An inner ring opening 452a1 is formed inside the inner ring 452a. This inner ring opening 452a1 is fixed to the outer peripheral surface of the spindle 41. Therefore, the inner ring 452a rotates together with the spindle 41.

A seal holding member 522 is attached to the X2 side of the outer ring 452b of the second bearing 452. The seal holding member 522 locks onto the outer peripheral surface of the outer ring 452b of the second bearing 452. The seal holding member 522 includes a base portion 522a facing the X2 side surface of the outer ring 452b and a holding portion 522b extending to the X2 side from the base portion 522a to support the seal member 512 from the X2 side, and a locking portion 522c extending to the X1 side from the base portion 522a to support the O-ring 492 from the X2 side and lock onto the outer peripheral surface of the outer ring 452b of the second bearing 452.

The seal member 512 is made of an elastic material, such as silicone rubber or fluororubber. However, the seal member 512 can also be made of other elastic materials besides silicone rubber and fluororubber. The seal member 512 surrounds the outer peripheral surface of the spindle 41 and has a ring shape with an open center. The seal member 512 has a maximum thickness at the outer peripheral portion 512a and a contact piece 512b that extends inward from the inner edge of the outer peripheral portion 512a toward the center of the ring. The contact piece 512b is a part that deforms elastically and has a lower modulus of elasticity than the outer peripheral portion 512a. The seal member 512 further has a ring opening 512c at the center of the ring, inside the contact piece 512b.

The outer peripheral portion 512a of the seal member 512 is supported by the holding portion 452d of the second bearing 452 on the X2 side and by the holding portion 522b of the seal holding member 522 on the X1 side, being pinched between the holding portion 452d of the second bearing 452 and the holding portion 522b of the seal holding member 522.

The contact piece 512b of the seal member 512 is arranged in the space surrounded by the inner peripheral surface of the holding portion 522b of the seal holding member 522 and the outer peripheral surface of the spindle 41. When the turbine rotor 42 of the air turbine handpiece 1 is not operating, that is, when high-pressure air is not supplied to the head part 20 from the supply duct of the handpiece main body 10, the contact piece 512b is in contact with the outer peripheral surface of the spindle 41.

Moreover, the diameter of the ring opening 512c of the seal member 512 is smaller than the diameter of the outer peripheral surface of the spindle 41. Therefore, when the turbine rotor 42 of the air turbine handpiece 1 is not operating, the contact piece 512b curves towards the X2 side and contacts the outer peripheral surface of the spindle 41 with contact pressure due to its elastic force. The position of contact between the contact piece 512b and the outer peripheral surface of the spindle 41 is the edge of the ring opening 512c.

Thus, when high-pressure air is not supplied to the head part 20 from the supply duct of the handpiece main body 10 and the turbine rotor 42 is not rotating, the contact piece 512b of the seal member 512 contacts the outer peripheral surface of the spindle 41 and seals the gap between the main housing 21 and the spindle 41.

Consequently, the seal member 512 can prevent foreign substances such as saliva and blood from entering the interior of the cartridge 40.

When high-pressure air is supplied from the supply duct of the handpiece main body 10 to the head part 20, the pressure inside the cartridge housing 400 increases, and when the turbine rotor 42 rotates at a preset speed or higher, air leaks from the cartridge housing 400 through the first bearing 451 into the space where the contact piece 511b of the seal member 511 is located, and through the second bearing 452 into the space where the contact piece 512b of the seal member 512 is located.

Then, the contact piece 511b of the seal member 511 is pushed radially outward by the air leaking into the space where the contact piece 511b is located, separating from the outer peripheral surface of the spindle 41, and creating a gap between the contact piece 511b and the outer peripheral surface of the spindle 41.

Similarly, the contact piece 512b of the seal member 512 is pushed radially outward by the air leaking into the space where the contact piece 512b is located, separating from the outer peripheral surface of the spindle 41, and creating a gap between the contact piece 512b and the outer peripheral surface of the spindle 41.

As mentioned earlier, when high-pressure air is supplied to the head part 20 from the supply duct of the handpiece main body 10, the turbine blade portions 422 of the turbine rotor 42 receive the high-pressure air, causing the turbine rotor 42 to rotate. Consequently, the spindle 41 and the cutting tool 30 rotate integrally with the turbine rotor 42. When high-pressure air is supplied to the head part 20 from the supply duct of the handpiece main body 10, gaps form between the contact piece 511b of the seal member 511 and the outer peripheral surface of the spindle 41, and between the contact piece 512b of the seal member 512 and the outer peripheral surface of the spindle 41, eliminating contact resistance and enabling the spindle 41 to rotate easily.

On the other hand, when the supply of high-pressure air to the head part 20 from the supply duct of the handpiece main body 10 stops, the rotation speed of the turbine rotor 42, spindle 41, and cutting tool 30 decreases. Also, the air leaking into the spaces where the contact pieces 511b and 512b of the seal members 511 and 512, respectively, are located reduces, and as the rotation speed of the turbine rotor 42 drops below a preset speed, the contact pieces 511b and 512b pushed radially outward come back into contact with the outer peripheral surface of the spindle 41. The contact resistance between the contact pieces 511b, 512b of the seal members 511, 512, respectively, and the outer peripheral surface of the spindle 41 brakes the rotation of the turbine rotor 42, spindle 41, and cutting tool 30. In this way, the seal members 511 and 512 function as a quick stop mechanism to brake the rotation of the turbine rotor 42, spindle 41, and cutting tool 30 when the supply of high-pressure air to the head part 20 stops.

Especially in this embodiment, since the seal members 511, 512 are provided on both the X2 side of the second bearing 452 and the X1 side of the first bearing 451, even when a material with a large inertia moment is used for the turbine rotor 42, sufficient braking force to stop the rotation of the turbine rotor 42, spindle 41, and cutting tool 30 when the supply of high-pressure air from the supply duct of the handpiece main body 10 to the head part 20 stops can be secured.

Therefore, while the embodiments of the present invention have been described with reference to the accompanying drawings, the present invention is not limited to these embodiments. It is apparent to those skilled in the art that various modifications and alterations falling within the scope of the claims are possible, and such modifications and alterations also fall within the scope of the present invention. The elements of the embodiments described above can be combined in any way without departing from the spirit of the invention.

For instance, in the turbine rotor 42 of the first and second embodiments, instead of stainless steel, other metals such as titanium can be used.

Additionally, in the first to third embodiments, while the seal member 46 is provided on the X2 side of the second bearing 452, it is also possible to provide multiple seal members 46 on the X2 side of the second bearing 452 or to provide multiple seal members on the X2 side of the second bearing 452, as well as multiple seal members on the X1 side of the first bearing 451. By increasing the number of seal members 46, it is possible to secure sufficient braking force to stop the rotation of the turbine rotor 42, spindle 41, and cutting tool 30 even when a material with a large inertia moment is used for the turbine rotor 42.

Additionally, in the first to third embodiments, while the spindle 41, turbine rotor 42, chuck mechanism portion 44, first bearing 451, second bearing 452, and seal member 46 are modularized as the cartridge 40 detachably attached to the head part 20, they do not necessarily have to be modularized.

Furthermore, in the first to third embodiments, while the seal member 46 is fixed to the main cartridge housing 401 of the cartridge 40, the seal member 46 may instead be provided on the first bearing 451 and/or the second bearing 452.

In the present disclosure, the following configurations are described. Corresponding elements in the embodiments are provided as examples and are not limited to these.
(1) A turbine rotor for a medical cutting instrument, formed of a metal with a density of 4.0 [g/cm³] or more.
   According to (1), by forming the turbine rotor from a metal with a density of 4.0 [g/cm³] or more, the inertia moment of the turbine rotor can be increased. This reduces the rapid increase in rotation speed of the turbine rotor and enables suppression of the decline in cutting power when a cutting load is applied during the rotation of the turbine rotor.
(2) The turbine rotor according to (1), having a Young's modulus [GPa] / density [g/cm³] value of 20 or higher.
   According to (2), since the turbine rotor has a Young's modulus [GPa] / density [g/cm³] value of 20 or higher, the deformation amount of the turbine rotor during high-speed rotation can be minimized.
(3) A turbine rotor for a medical cutting instrument including: a substantially cylindrical rotating shaft portion and a plurality of turbine blade portions extending outward in the radial direction from the axial direction of the rotating shaft portion, wherein the rotating shaft portion is formed of a metal with a density of 4.0 [g/cm³] or more.
   According to (3), since the rotating shaft portion is formed of a metal with a density of 4.0 [g/cm³] or more, the inertia moment of the turbine rotor can be increased. This reduces the rapid increase in rotation speed of the turbine rotor and enables suppression of the decline in cutting power when a cutting load is applied during the rotation of the turbine rotor. Additionally, since the turbine blade portions can be formed of more readily processable materials, turbine blade portions with complex shapes can be easily molded.
(4) The turbine rotor according to (3), wherein the rotating shaft portion has a Young's modulus [GPa] / density [g/cm³] value of 20 or higher.
   According to (4), since the rotating shaft portion has a Young's modulus [GPa] / density [g/cm³] value of 20 or higher, the deformation amount of the rotating shaft portion during high-speed rotation can be minimized.
(5) A turbine rotor for a medical cutting instrument, wherein the turbine rotor has a counterweight attached, and the counterweight is formed of a material denser than the material of the turbine rotor.
   According to (5), since the counterweight attached to the turbine rotor is formed of a material denser than the material of the turbine rotor, the inertia moment of the turbine rotor with the counterweight can be increased. This reduces the rapid increase in the rotation speed of the turbine rotor and enables suppression of the decline in cutting power when a cutting load is applied during the rotation of the turbine rotor.
(6) The turbine rotor according to any one of (1) to (4), wherein the metal is stainless steel.
   According to (6), since the turbine rotor is formed of stainless steel, which is an easily processable material, the turbine rotor can be easily molded.
(7) The turbine rotor according to (6), wherein the stainless steel is austenitic stainless steel.
   According to (7), since the turbine rotor is formed of austenitic stainless steel, which is less likely to corrode during hot water washing, it has excellent corrosion resistance, eliminating the need for surface treatments such as anodizing to improve corrosion resistance.
(8) A cartridge detachably attachable to a medical cutting instrument including the turbine rotor described in any one of (1) to (5) and a quick stop mechanism to brake the turbine rotor.
   According to (8), since the cartridge detachably attachable to a medical cutting instrument includes a quick stop mechanism to brake the turbine rotor, the rotation of the turbine rotor can be quickly stopped even when a material with a large inertia moment is used for the turbine rotor.
(9) The cartridge according to (8), wherein the cartridge includes: a spindle with a substantially cylindrical shape and a hollow interior, with the turbine rotor fixed to its outer peripheral surface, and a seal member surrounding the outer peripheral surface of the spindle, contacting the outer peripheral surface of the spindle when the turbine rotor is not rotating, and separating from the outer peripheral surface of the spindle when the turbine rotor rotates at a preset speed or higher, with the seal member forming the quick stop mechanism.
   According to (9), since the seal member functions as a quick stop mechanism to brake the rotation of the turbine rotor, the quick stop mechanism can be implemented without increasing the number of components.
(10) The cartridge according to (9), wherein the circumferential surface roughness Rz of the outer peripheral surface of the spindle in contact with the seal member is 12.5 [µm] or less.
   According to (10), by ensuring that the circumferential surface roughness Rz of the outer peripheral surface of the spindle in contact with the seal member is 12.5 [µm] or less, sufficient contact resistance between the seal member and the outer peripheral surface of the spindle can be secured. Therefore, even when a material with a large inertia moment is used for the turbine rotor, adequate braking force to stop the rotation of the turbine rotor, spindle, and cutting tool can be ensured.
(11) A medical cutting instrument including the turbine rotor described in any one of (1) to (5), wherein the medical cutting instrument includes a quick stop mechanism to brake the turbine rotor.
   According to (11), since the medical cutting instrument includes a quick stop mechanism to brake the turbine rotor, the rotation of the turbine rotor can be quickly stopped even when a material with a large inertia moment is used for the turbine rotor.
(12) The medical cutting instrument according to (11), wherein the medical cutting instrument includes: a spindle with a substantially cylindrical shape and a hollow interior, with the turbine rotor fixed to its outer peripheral surface, and a seal member surrounding the outer peripheral surface of the spindle, contacting the outer peripheral surface of the spindle when the turbine rotor is not rotating, and separating from the outer peripheral surface of the spindle when the turbine rotor rotates at a preset speed or higher, with the seal member forming the quick stop mechanism.
   According to (12), since the seal member functions as a quick stop mechanism to brake the rotation of the turbine rotor, the quick stop mechanism can be implemented without increasing the number of components.
(13) The medical cutting instrument according to (12), wherein the circumferential surface roughness Rz of the outer peripheral surface of the spindle in contact with the seal member is 12.5 [µm] or less.

According to (13), by ensuring that the circumferential surface roughness Rz of the outer peripheral surface of the spindle in contact with the seal member is 12.5 [µm] or less, sufficient contact resistance between the seal member and the outer peripheral surface of the spindle can be secured. Therefore, even when a material with a large inertia moment is used for the turbine rotor, adequate braking force to stop the rotation of the turbine rotor, spindle, and cutting tool can be ensured.

This application is based on Japanese Patent Application No. 2022-190794, filed on November 29, 2022, the entire content of which is hereby incorporated by reference.

1, 1A, 1B, 1C Air Turbine Handpiece (Medical Cutting Instrument)
30 Cutting Tool
40 Cartridge
41 Spindle
42 Turbine Rotor
421 Rotating Shaft Portion
422 Turbine Blade Portion
46, 511, 512 Seal Member (Quick Stop Mechanism)
48 Counterweight

## Claims

1. A turbine rotor for a medical cutting instrument, which is formed of a metal with a density of 4.0 [g/cm³] or more.

2. The turbine rotor according to claim 1, having a Young's modulus [GPa] / density [g/cm³] value of 20 or higher.

3. A turbine rotor for a medical cutting instrument, comprising:
a rotating shaft portion having a substantially cylindrical shape; and
a plurality of turbine blade portions extending radially outward with respect to the axial direction of the rotating shaft portion,
wherein the rotating shaft portion is formed of a metal with a density of 4.0 [g/cm³] or more.

4. The turbine rotor according to claim 3,
wherein the rotating shaft portion has a Young's modulus [GPa] / density [g/cm³] value of 20 or higher.

5. A turbine rotor for a medical cutting instrument,
wherein the turbine rotor is provided with a counterweight, and
wherein the counterweight is formed of a material denser than the material of the turbine rotor.

6. The turbine rotor according to any one of claims 1 to 4,
wherein the metal is stainless steel.

7. The turbine rotor according to claim 6,
wherein the stainless steel is austenitic stainless steel.

8. A cartridge detachably attachable to a medical cutting instrument, the cartridge comprising:
the turbine rotor described in any one of claims 1 to 5; and
a quick stop mechanism for braking the turbine rotor.

9. The cartridge according to claim 8, further comprising:
a spindle having a substantially cylindrical shape and a hollow interior, with the turbine rotor fixed to its outer peripheral surface; and
a seal member surrounding the outer peripheral surface of the spindle, contacting the outer peripheral surface of the spindle when the turbine rotor is not rotating, and separating from the outer peripheral surface of the spindle when the turbine rotor rotates at a preset speed or higher,
wherein the seal member is the quick stop mechanism.

10. The cartridge according to claim 9,
wherein the circumferential surface roughness Rz of the outer peripheral surface of the spindle in contact with the seal member is 12.5 [µm] or less.

11. A medical cutting instrument comprising the turbine rotor described in any one of claims 1 to 5,
wherein the medical cutting instrument includes a quick stop mechanism for braking the turbine rotor.

12. The medical cutting instrument according to claim 11,
wherein the medical cutting instrument comprises:
a spindle having a substantially cylindrical shape and a hollow interior, with the turbine rotor fixed to its outer peripheral surface; and
a seal member surrounding the outer peripheral surface of the spindle, contacting the outer peripheral surface of the spindle when the turbine rotor is not rotating, and separating from the outer peripheral surface of the spindle when the turbine rotor rotates at a preset speed or higher,
wherein the seal member is the quick stop mechanism.

13. The medical cutting instrument according to claim 12,
wherein the circumferential surface roughness Rz of the outer peripheral surface of the spindle which contacts with the seal member is 12.5 [µm] or less.
